# FASCICULE DE BREVET EUROPEEN

(11) **EP 2 218 040 B1**
(45) Date de publication et mention de la délivrance du brevet: **09.11.2011**
(21) Numéro de dépôt: 08804931.7
(22) Date de dépôt: 30.09.2008
(51) Int. Cl.: G06K 19/073

(54) **DISPOSITIF DE COMMUNICATION RADIOFRÉQUENCE COMPRENANT UN TEMPORISATEUR**
HOCHFREQUENZKOMMUNIKATIONSEINRICHTUNG MIT EINEM TIMER
RADIOFREQUENCY COMMUNICATION DEVICE INCLUDING A TIMER

(30) Priorité: 26.10.2007 EP 07301502
(43) Date de publication de la demande: 18.08.2010
(73) Titulaire: Gemalto SA, 92190 Meudon (FR)
(72) Inventeur: SEBAN, Frédérick, F-13260 Cassis (FR); FIDALGO, Jean-Christophe, F-13420 Gémenos (FR); ZAFRANY, Michael, F-13006 Marseille (FR)
(86) Numéro de dépôt international: PCT/EP2008/063105
(87) Numéro de publication internationale: WO 2009/053225

(56) Documents cités:
- WO-A-2007/074011
- DE-A1-102006 015 782
- US-A1- 2003 132 301
- US-A1- 2007 132 590

## Description

L'invention concerne les dispositifs de communication radiofréquence comportant un interrupteur de fonctionnement empêchant la lecture du dispositif à l'insu du porteur.

Elle concerne plus particulièrement des dispositifs électroniques de transaction radiofréquence comportant un premier interrupteur apte à permettre un fonctionnement radiofréquence du dispositif sur actionnement de l'interrupteur et un arrêt de fonctionnement après relâchement de l'actionnement.

Les dispositifs visés en premier lieu par l'invention sont de préférence des cartes à puce de type sans-contact ou hybride, des inserts comportant une antenne radiofréquence ou le cas échéant, tout support de circuit d'antenne comme des passeports électroniques. De tels dispositifs à communication radiofréquence dits transpondeurs sans-contact, répondent notamment pour la plupart à la norme ISO-IEC 14443. Des facteurs de forme autres que des cartes, tels des clés USB peuvent être visés par l'invention.

Ces dispositifs sont destinés à fournir au porteur des moyens pour accepter et/ou refuser l'accès à des données contenues dans ledit transpondeur à un dispositif de lecture externe. En effet, l'un des problèmes soulevés par les transpondeurs sans-contact visés par l'invention, et notamment pour des applications sensibles telles que carte bancaire, porte-monnaie électronique, e-passeport, cartes d'identité, provient du fait que le transpondeur, peut être interrogé par un lecteur distant, et cette opération peut être effectuée alors même que le porteur n'en est pas conscient.

L'un des moyens permettant de résoudre cet inconvénient est l'utilisation d'un interrupteur. Ce moyen efficace reste non applicable à des antennes dont les lignes ne dépassent pas une certaine largeur (1mm); Il est donc difficile d'établir des contacts avec interrupteur sur des antennes en fil incrusté ou fil conducteur fixé par broderie ou équivalent. Or aujourd'hui, l'utilisation de tels fils conducteurs s'avère préféré pour être conforme aux différentes normes d'autant plus que les dispositifs sont de plus en plus réduits.

De tels fils conducteurs, généralement en cuivre, très fins, de l'ordre de 113 µm, et espacés de l'ordre de 700 µm pour constituer des spires d'antenne, permettent d'obtenir un facteur qualité élevé, par exemple supérieur à 44 contrairement à des antennes obtenues par dépôt de matière conductrice, notamment par sérigraphie d'encre conductrice. Le diamètre des spires peut être compris entre 200 µm et 300 µm.

Les inventeurs ont identifié deux problèmes suivants dans la réalisation de carte sans-contact à interrupteur.

Des interrupteurs sont disposés sur un parcours ouvert de l'antenne de manière à le fermer sur actionnement et permettre ainsi la fonction RF de s'effectuer au cours d'une transaction avec un lecteur ou un autre dispositif RF. Ces interrupteurs sont soumis à des défauts de contact pendant la transaction et de ce fait une transaction peut s'interrompre accidentellement.

Le défaut de contact peut provenir d'une défaillance de l'interrupteur ou d'un relâchement de pression involontaire de l'utilisateur. Il s'ensuit des délais augmentés dans la transaction.

Un autre problème identifié par les inventeurs est la présence de courts-circuits électriques dans l'interrupteur ce qui peut perturber la transaction. Dans les deux cas la transaction doit être recommencée, faisant perdre du temps à l'utilisateur notamment.

Le document US-A-2003 est relatif à une carte sans contact comportant un interrupteur manuel à fluide se déplaçant entre deux chambres dans un sens sous l'effet d'une pression de doigt sur une membrane et dans l'autre sens contraire sous l'effet d'une force de rappel. Un contact autorisant le fonctionnement de la carte est relâché au fur et à mesure que le fluide revient dans la chambre initiale par effet élastique. Voir le préambule de la revendication 1.

Le document WO-A-2007/074011 concerne un document sans contact avec une antenne radiofréquence. L'antenne peut être activée par un interrupteur électrique qui reçoit le signal d'activation du dispositif d'interrogation. L'interrupteur peut être un interrupteur monostable qui désactive l'antenne après une durée de temps prédéterminée.

L'invention a pour objectif de résoudre les inconvénients précités.

L'invention a pour objectif de réduire les délais de transaction occasionnés par la présence d'interrupteur. Elle a également pour objectif d'éviter les courts-circuits dans le bouton interrupteur.

Le concept de l'invention consiste, dans un mode de réalisation préféré, lors d'une transaction qui effectue par exemple une vérification longue du porteur et de la carte, à réduire le temps d'activation de l'interrupteur par l'utilisateur, par rajout d'une temporisation électronique (notamment dans le corps de carte), liée au temps de communication de la transaction.

Ainsi, lorsque l'interrupteur est activé, il permet ainsi une capture de l'énergie (l'alimentation) du lecteur via une self (secondaire) permettant ainsi de charger un circuit RC (de temporisation) qui ce dernier activera un interrupteur statique, durant le temps nécessaire à la transaction.

L'utilisateur peut ainsi par une seule impulsion sur son interrupteur, effet tactile préservé, éviter tout "arrachement" de l'interface radiofréquence RF, c'est-à-dire, tout arrêt de la transaction RF résultant d'un défaut d'actionnement de l'interrupteur.

L'invention a donc pour premier objet un dispositif électronique de transaction radiofréquence avec les caractéristiques de la revendication 1.

Selon d'autres caractéristiques du dispositif:
- le circuit temporisateur comprend ou actionne un second interrupteur disposé sur un circuit d'antenne principal, ledit circuit temporisateur étant apte à présenter un état d'activation dans lequel ce second interrupteur (8) ferme ce circuit d'antenne principal;
- le dispositif est apte à obtenir l'état d'activation par connexion du circuit temporisateur à une source d'énergie ou un moyen (9) collectant de l'énergie et par actionnement du premier interrupteur.
- le moyen de collecte est une bobine électromagnétique.

L'invention a également pour objet une carte à puce de type sans-contact comprenant le dispositif précédent. La carte à puce peut avoir le circuit principal d'antenne disposé dans ou sur le circuit intégré ou sur un corps de carte ou sur un module ayant un diélectrique portant le circuit intégré.

Un autre objet de l'invention est un module de circuit intégré pour dispositif électronique de transaction radiofréquence avec les caractéristiques de la revendication 15.

D'autres particularités et avantages de l'invention apparaîtront à la lecture de la description faite à titre d'exemple non limitatif et en regard des dessins annexés sur lesquels :
- La figure 1 illustre schématiquement un dispositif radiofréquence conforme à un mode de réalisation de l'invention ;
- La figure 2 illustre le schéma de principe plus détaillé du circuit électronique correspondant à celui de la figure 1;
- Les figures 3, et 4 illustrent un exemple de réalisation et/ou d'intégration du circuit électronique conforme à l'invention dans un support ou inlay pour carte à puce;
- La figure 5 illustre un exemple de réalisation d'un module comprenant le circuit dit temporisateur et le circuit intégré destiné à contenir ou contenant une application logicielle de transaction électronique.
- La figure 6 illustre un exemple d'interrupteur pour carte à puce;

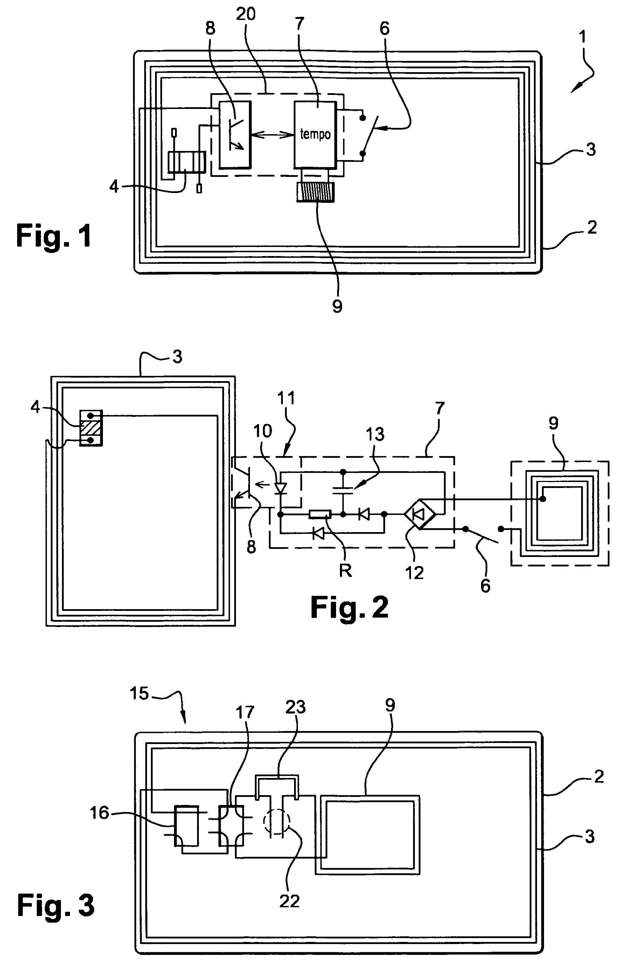

En relation avec les figures 1 et 2, un dispositif électronique de transaction radiofréquence 1 est dans l'exemple sous forme d'une carte à puce ou support à puce de circuit intégré bien que d'autres formes de réalisation puissent mettre en oeuvre les moyens de l'invention tels qu'une clé USB ou tout autre objet portable. La carte comprend de manière connue un support ou corps de carte 2 comportant une antenne électromagnétique 3 dans le plan du support. Cette antenne est reliée aux bornes d'une puce de circuit intégré ou à celles d'un module électronique ou composant électronique 4 la comportant.

La puce est apte à mettre en oeuvre au moins une application logicielle mémorisée dedans pour réaliser une transaction électronique telle qu'un paiement bancaire, une opération de débit/crédit de points, d'unités, de fidélité, de contrôle d'accès, d'authentification, etc. L'application peut être mise en oeuvre par interaction avec un lecteur ou borne radiofréquence ou un autre dispositif du même genre que l'invention comportant une fonction de type NFC (Near field communication).

Le dispositif comporte également un premier interrupteur 6 apte à permettre un fonctionnement radiofréquence du dispositif sur actionnement de l'interrupteur et un arrêt de fonctionnement après relâchement de l'actionnement.
L'interrupteur est ici ouvert au repos et interrompt un circuit du dispositif.

Selon une caractéristique de ce mode de réalisation de l'invention, le dispositif comprend un circuit 7 apte à maintenir après activation du premier interrupteur 6, un fonctionnement radiofréquence continu pendant une durée déterminée.

D'une manière générale, le circuit 7 apte à maintenir un fonctionnement radiofréquence continu après activation et relâchement du premier est dit temporisateur. C'est en fait un circuit de maintien du fonctionnement de l'antenne quel que soit sa forme; ce circuit est indépendant de l'état de l'interrupteur après actionnement. La durée peut être celle correspondant au temps pendant lequel le dispositif est mis dans le champ après actionnement de l'interrupteur principal. D'autres circuits équivalents peuvent convenir, comme ceux à relais ou genre minuterie.

Par exemple, un circuit du genre bistable dont la position actionnée faisant fonctionner le dispositif serait maintenu tant que le dispositif est dans le champ électromagnétique grâce notamment à une bobine.

Le circuit temporisateur, ici interrompu par l'interrupteur 6 au repos, est aussi relié d'une part à un second interrupteur 8 (l'interrupteur 8 peut aussi être inclus dans le circuit temporisateur) et d'autre part à une source d'alimentation ou un moyen de collecte d'énergie 9. Dans l'exemple, il s'agit d'une bobine de champ électromagnétique 9; Elle servira de générateur de courant sous l'effet d'un champ électromagnétique d'un lecteur (non représenté).

Dans une variante, la source (ou le moyen 9) peut être formée (ou être remplacée) aussi par une batterie fine spécifique, notamment du type utilisée dans des cartes à puce ou apte à être laminée ou encastrée dans le support ou inlay (sous-ensemble support d'un circuit électrique et/ou électronique)

La durée déterminée, visée précédemment, correspond par exemple, au moins à celle nécessaire à la réalisation d'une transaction considérée. La durée est de préférence réglée à la fabrication ou selon le choix des composants.

Selon une autre caractéristique du dispositif, le circuit temporisateur comprend ou actionne un second interrupteur (8, 10, 11) disposé sur un circuit d'antenne principal 3; En l'occurrence, ce second interrupteur est un interrupteur électronique du type statique; en particulier, c'est un transistor 8 à diode LED 10 agissant sur la base d'un transistor 8 pour le rendre passant.

Selon une caractéristique, le circuit temporisateur est apte à présenter un état d'activation dans lequel ce second interrupteur, (notamment le transistor 8) est actionné pour fermer ce circuit d'antenne principal 3.

A cet effet, dans l'exemple à la figure 2, le premier interrupteur 6 a été branché de manière à connecter le moyen de collecte d'énergie (ici la bobine) au circuit temporisateur 7. Ainsi, on peut obtenir un état d'activation ou de connexion du circuit temporisateur à une source d'énergie ou un moyen apte à collecter de l'énergie sur actionnement du premier interrupteur,

Le circuit temporisateur 7 comprend un circuit redresseur 12 et une capacité 13 banchés pour fournir une tension seuil d'activation du second interrupteur et une tension de chargement d'une capacité 13 sur actionnement du premier interrupteur 6.

La capacité du circuit temporisateur est déterminée de manière à fournir par décharge au moins une tension seuil d'activation du second interrupteur pendant au moins une durée correspondant à une transaction radiofréquence. Par exemple, la durée (D) peut varier selon la longueur de l'échange de communication d'un millième de seconde à 2 secondes, voire 4. Pour une application bancaire, la durée D mini est par exemple égale à une durée maxi nécessaire à une transaction de type EMV.

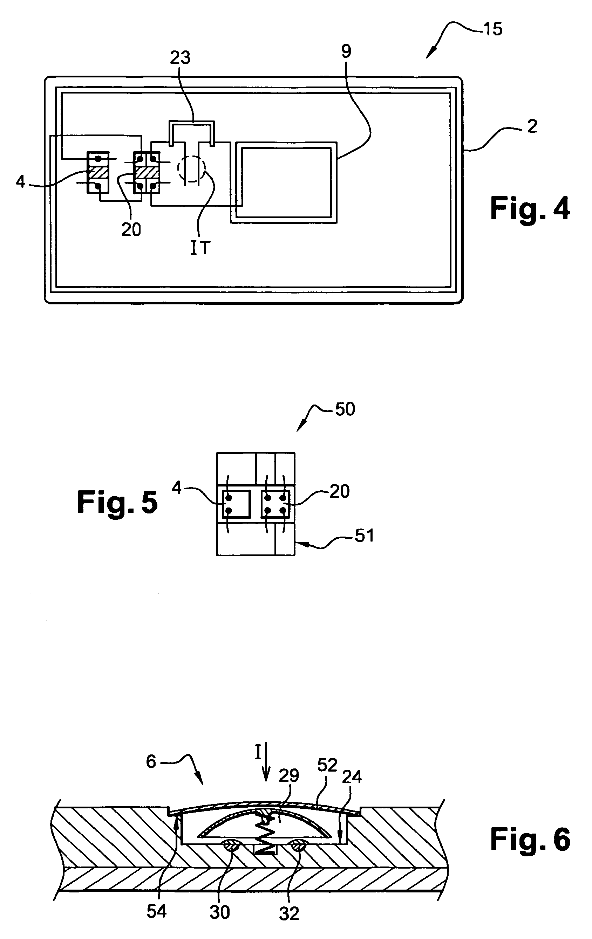

Sur les figures 3, 4, pour la fabrication du dispositif et pour un côté pratique, on a disposé le circuit temporisateur et le second l'interrupteur électronique dans un second module ou composant électronique 20.

Le dispositif radiofréquence 1 est réalisé sous forme d'insert ou "inlay" 15 pour carte à puce sans-contact, obtenu selon un mode de mise en oeuvre particulier. Dans une première étape (figure 3), l'antenne 3 est réalisée sur un substrat ou support 2 sous forme d'un circuit fermé (à l'exception des extrémités d'antenne destinées à être connectées au composant électronique 3). En même temps, ou après, la bobine 9 est réalisée sur le même substrat. Le substrat comporte de préférence deux cavités 16, 17, réalisées de préférence avant l'antenne et bobine, pour recevoir respectivement un premier module 4 ou puce de circuit intégré et le second module ou composant électronique 20 comportant le circuit temporisateur et le cas échéant aussi le second interrupteur électronique.

Dans l'exemple, le fil d'antenne et/ou de bobine 9 est incrusté dans un support polymère 11 par ultrasons. Les fils survolent les cavités et emplacements de connexion aux modules jusqu'à atteindre un bord de cavité. Les spires d'antenne et de bobines pourraient être réalisées autrement, par toute technique connue, telle la gravure et dépôt électrochimique, découpe de feuille métallique, sérigraphie, broderie. Le support peut être en divers matériaux notamment synthétique et/ou comprendre des fibres en matière cellulosique comme le papier.

La bobine 9 peut être en circuit fermé au moins momentanément pendant la fabrication et/ou personnalisation au niveau d'une zone 22 recevant ou pouvant recevoir un interrupteur par la suite. A cet effet, un élément de court-circuit, notamment fusible 23, peut être disposé sur le circuit de bobine 9 de manière à court-circuiter l'interrupteur ou des bornes destinées à connecter un interrupteur, l'élément étant apte à être ouvert dans une étape ultérieure. Ainsi des essais électriques et de personnalisation peuvent être réalisés même après montage de l'interrupteur et sans avoir besoin de l'actionner. Le fusible est placé ici juste avant l'emplacement de l'interrupteur mais pourrait être placé d'une manière quelconque dès l'instant où l'interrupteur est mis en court-circuit par le fusible, par exemple juste après. La matière du fusible et ses caractéristiques dimensionnelles sont déterminées de manière à faire claquer le fusible par la soumission de l'antenne à un champ électromagnétique suffisamment fort pour générer un courant ou intensité de claquage.

Le cercle en pointillé 22 illustre un emplacement de zone 2 destinée à recevoir le premier interrupteur ou à être usinée. Le premier interrupteur est destiné à être disposé sur le circuit de bobine.

A la figure 4, les deux modules ou composants 4, 20 électroniques sont placés sur le substrat avant ou après la réalisation de l'antenne et bobine et connectés ensemble et aux bobine et antenne selon le schéma électrique des figures 2 ou 3.

Ensuite, ce substrat de transpondeur muni d'interrupteurs 6, 8 est recouvert d'au moins une feuille ou couche de matériau (non représentée) pour former un "inlay" ou sous-ensemble dit insert. La feuille peut comporter au préalable une cavité 24 correspondant à la zone 22 destinée à recevoir un interrupteur 6 réalisé conformément à la figure 6 à titre d'exemple.

La figure 6 décrit un bouton interrupteur 6 dans lequel les spires de la bobine 30, 32 ne sont pas sectionnées par une cavité de logement d'un contacteur 29, constitué ici par un dôme comprenant au centre un ressort logé en partie dans une mini cavité centrale de la cavité 24. L'élément contacteur 29 est ici une rondelle de type Belleville, comportant un dôme central relié éventuellement à quatre pieds (non représentés) en forme de languette élastique. Enfin, un opercule souple ou membrane 52, accessible de l'extérieur, est fixé, notamment par collage, sur un plan 54 usiné au-dessus de l'élément conducteur, en obturant la cavité. La couche ou feuille comportant l'interrupteur 6 est de préférence réalisé en deux feuilles ou couches l'antenne et/ou bobine étant à leur interface.

Dans une variante de réalisation illustré à la figure 5, les deux composants ou module 4, 20 sont agencés dans un seul module ou composant électronique 50. A cet effet, le module peut comporter, par exemple, un substrat diélectrique métallisé 51 et des emplacements du circuit intégré 4 et un emplacement du composant 20 formant ou comportant le circuit temporisateur et interrupteur électronique ou optoélectronique. Cela facilite l'intégration et connexion du module dans le dispositif au cours de la fabrication.

Selon des variantes de réalisation, pour simplifier la fabrication et intégration, on peut prévoir de réaliser l'antenne 3 et/ou la bobine 9 dans le circuit intégré 4 ou sur le support 2 ou sur un diélectrique 51 de module 50.

Le fonctionnement du dispositif est décrit ci-après. Un utilisateur approche sa carte bancaire 1 devant un terminal bancaire comportant une fonction de lecteur radiofréquence. Après avoir tapé son code PIN sur un clavier du terminal, l'utilisateur valide la transaction, notamment suite à une étape d'authentification réciproque, en mettant sa carte dans le champ du lecteur et en créant une impulsion (I) sur le premier l'interrupteur 6.

Pendant le bref instant de l'impulsion, (par exemple moins d'une seconde) le circuit de la bobine ayant été fermé en présence du champ électromagnétique, le pont redresseur, du type pont de Wheatstone 12, fournit une tension continue qui alimente directement la diode émettrice LED 8 du composant interrupteur, ce dernier se mettant dans un état de conduction et fermeture du circuit de l'antenne principale.

De ce fait, l'antenne principale étant opérationnelle, peut recevoir elle-même à son tour de l'énergie du champ du lecteur pour alimenter le circuit-intégré et initier une transaction notamment par rétro-modulation du champ reçu.

Pendant le temps de l'impulsion le courant ou tension induit dans la bobine a aussi chargé la capacité 13 placée aux bornes de l'ensemble composé de la diode (LED) 10 et résistance (R).
Après l'impulsion, l'utilisateur peut relâcher le premier interrupteur 6 puisque la capacité 13 en se déchargeant alimente à son tour la diode 10 pour maintenir fermé le circuit d'antenne 3. Le cas échéant, une diode peut être placée juste après le pont 12 ou sur l'élément "shunt" de la résistance et diode.

Si la durée de la transaction dépasse celui de l'impulsion (I) ou de l'actionnement, la transaction peut être avantageusement poursuivie sans avoir à maintenir l'interrupteur actionné davantage grâce à l'invention, tant que la capacité fournit une tension supérieure à une tension seuil (TS) nécessaire à l'actionnement de l'interrupteur électronique.

Le dispositif peut représenter également un document d'identité, passeport électronique ou être inclus dedans.

## Revendications

1. Dispositif électronique de transaction radiofréquence comportant un premier interrupteur (6) apte à permettre un fonctionnement radiofréquence du dispositif sur actionnement de l'interrupteur et un arrêt de fonctionnement après relâchement de l'actionnement, ledit dispositif comprenant un circuit temporisateur (7, 8, 20) apte à maintenir après son activation par l'actionnement du premier interrupteur (6), un fonctionnement radiofréquence continu pendant une durée au moins égale à la durée d'une transaction à effectuer,
**caractérisé en ce qu'**il est apte à obtenir l'état d'activation du temporisateur par connexion du circuit temporisateur à une source d'énergie électrique ou à un moyen (9) collectant de l'énergie électrique par actionnement du premier interrupteur (6).

2. Dispositif selon l'une des revendications 1, **caractérisé en ce que** le circuit temporisateur (7, 8, 20) comprend ou actionne un second interrupteur (8) disposé sur un circuit d'antenne principal (3), ledit circuit temporisateur étant apte à présenter un état d'activation dans lequel ce second Interrupteur (8) ferme ce circuit d'antenne principal.

3. Dispositif selon la revendication 2, **caractérisé en ce que** le premier interrupteur est branché de manière à interrompre le circuit temporisateur (7).

4. Dispositif selon la revendication 2, **caractérisé en ce que** le premier interrupteur est branché de manière à interrompre la source d'énergie ou moyen de collecte d'énergie (9).

5. Dispositif selon la revendication 4, **caractérisé en ce que** le moyen de collecte est une bobine électromagnétique (9).

6. Dispositif selon la revendication 4, **caractérisé en ce que** la source d'énergie est une batterie.

7. Dispositif selon l'une quelconque des revendications précédentes. **caractérisé en ce que** le second interrupteur (11, 20) est un interrupteur électronique statique.

8. Dispositif selon l'une quelconque des revendications précédentes, **caractérisé en ce que** le circuit temporisateur comprend un circuit redresseur (12) pour fournir une tension seuil d'activation du second interrupteur et une tension de chargement d'une capacité (13) sur actionnement du premier interrupteur (6).

9. Dispositif selon l'une quelconque des revendications précédentes, **caractérisé en ce que** la capacité du circuit temporisateur est déterminée de manière à fournir par décharge au moins une tension seuil d'activation (TS) du second interrupteur pendant au moins une durée (D) correspondant à une transaction radiofréquence.

10. Dispositif selon l'une quelconque des revendications précédentes, **caractérisé en ce que** le circuit temporisateur (7) et le second l'interrupteur électronique (8) sont disposés ensemble dans un second module ou composant électronique (20, 51).

11. Dispositif selon l'une quelconque des revendications précédentes, **caractérisé en ce que** le second module ou composant électronique (20) est disposé sur le circuit d'antenne (3) et est relié à une bobine (6) disposé sur le support.

12. Dispositif selon la revendication 6, **caractérisé en ce que** le premier interrupteur (6) est disposé sur le circuit de bobine (9).

13. Carte à puce de type sans-contact comprenant le dispositif selon l'une quelconque des revendications précédentes.

14. Carte à puce selon la revendication 13, **caractérisé en ce que** le circuit principal d'antenne (3) est disposé dans ou sur le circuit intégré ou sur un corps de carte (2) ou sur un module ayant un diélectrique portant le circuit intégré.

15. Module de circuit intégré pour dispositif électronique do transaction radiofréquence, ledit circuit intégré étant destiné à contenir une application logicielle de transaction dans le circuit Intégré, ledit module comprenant un premier interrupteur et un circuit temporisateur (7, 8, 20) ayant un état d'activation destiné à maintenir le circuit intégré (4) alimenté pendant au moins la durée de la transaction, **caractérisé en ce que** l'état d'activation est obtenu par connexion du circuit temporisateur à une source d'énergie électrique ou à un moyen (9) collectant de l'énergie électrique et par actionnement du premier interrupteur (6).

## Claims

1. An electronic radiofrequency-transaction device that comprises a first switch capable of providing a radiofrequency operation of the device upon actuation of a switch and an operation stop when the actuation is released, said device comprising a timer circuit (7, 8, 20) capable of maintaining, after the actuation thereof by the activation of the first switch (6), a continuous switching radiofrequency operation for a duration at least equal to the duration of a transaction to be carried out,
**characterised in that** it is capable of obtaining the actuation state through the connection of a timer circuit to a source of power or to means (9) collecting power and through the actuation of the first switch (6).

2. A device according to claim 1, **characterised in that** the timer circuit (7, 8, 20) comprises or actuates a second switch (8) positioned on a main antenna circuit (3), with said timer circuit being capable of having an actuation state wherein such second switch (8) closes the main antenna circuit.

3. A device according to claim 2, **characterised in that** the first switch is so connected as to break off the timer circuit (7).

4. A device according to claim 2, **characterised in that** the first switch is so connected as to break off the source of power or the power collecting means (9).

5. A device according to claim 4, **characterised in that** the collecting means is an electromagnetic coil (9).

6. A device according to claim 4, **characterised in that** the source of power is a battery.

7. A device according to any one of the preceding claims, **characterised in that** the second switch (11, 20) is a static electronic switch.

8. A device according to any one of the preceding claims, **characterised in that** the timer circuit comprises a rectifier circuit (12) to supply a threshold voltage for the actuation of the second switch and a loaded voltage of a capacity (13) upon the actuation of the first switch (6).

9. A device according to any one of the preceding claims, **characterised in that** the capacity of the timer circuit is so determined as to supply, by unloading, at least a threshold voltage for the actuation (TS) of the second switch for at least the duration (D) corresponding to a radiofrequency-transaction.

10. A device according to any one of the preceding claims, **characterised in that** the timer circuit (7) and the second electronic switch (8) are positioned together in a second electronic module or component (20, 51).

11. A device according to any one of the preceding claims, **characterised in that** the second electronic module or component (20) is positioned on the antenna circuit (3) and is connected to a coil (6) positioned on the support.

12. A device according to claim 6, **characterised in that** the first switch (6) is positioned on the coil circuit (9).

13. A smart card of the contactless type comprising the device according to any one of the preceding claims.

14. A smart card according to claim 13, **characterised in that** the main antenna circuit (3) is positioned in or on the integrated circuit or on a card body (2) or on a module having a dielectric supporting the integrated circuit.

15. An integrated circuit module for a radiofrequency-transaction electronic device, said integrated circuit being intended to contain a software transaction application in the integrated circuit, said module comprising a timer circuit (7, 8, 20) having an actuation state intended to maintain the integrated circuit (4) supplied for at least the duration of the transaction, **characterised in that** the actuation state is obtained by connecting the timer circuit to a source of electric power or means (9) collecting electric energy and by actuating the first switch (6).

## Patentansprüche

1. Elektronische Vorrichtung zur Funkfrequenzübertragung mit einem ersten Schalter (6), der geeignet ist, einen Funkfrequenzbetrieb der Vorrichtung per Betätigung des Schalters und eine Abschaltung des Betriebs nach dem Loslassen der Betätigung zu erlauben, wobei die genannte Vorrichtung einen Verzögerungsschaltkreis (7, 8, 20) umfasst, der geeignet ist, nach seiner Aktivierung durch die Betätigung des ersten Schalters (6) einen kontinuierlichen Funkfrequenzbetrieb während seiner Dauer von wenigstens gleich einer durchzuführenden Übertragung beizubehalten,
**dadurch gekennzeichnet, dass** sie geeignet ist, den Aktivierungszustand der Verzögerung per Anschluss des Verzögerungsschaltkreises an eine elektrische Energiequelle oder an ein Mittel (9) zu erreichen, das die elektrische Energie per Betätigung des ersten Schalters (6) speichert.

2. Vorrichtung gemäß Anspruch 1, **dadurch gekennzeichnet, dass** der Verzögerungsschaltkreis (7, 8, 20) einen zweiten Schalter (8) umfasst oder betätigt, der auf einem Hauptantennenschaltkreis (3) angeordnet ist, wobei der genannte Verzögerungsschaltkreis geeignet ist, einen Aktivierungszustand aufzuweisen, in dem dieser zweite Schalter (8) diesen Hauptantennenschaltkreis schließt.

3. Vorrichtung gemäß Anspruch 2, **dadurch gekennzeichnet, dass** der erste Schalter derart angeschlossen ist, dass der Verzögerungsschaltkreis (7) unterbrochen wird.

4. Vorrichtung gemäß Anspruch 2, **dadurch gekennzeichnet, dass** der erste Schalter derart angeschlossen ist, dass die Energiequelle oder das Energiespeichermittel (9) unterbrochen ist.

5. Vorrichtung gemäß Anspruch 4, **dadurch gekennzeichnet, dass** das Speichermittel eine elektromagnetische Spule ist.

6. Vorrichtung gemäß Anspruch 4, **dadurch gekennzeichnet, dass** die Energiequelle eine Batterie ist.

7. Vorrichtung gemäß einem der vorherigen Ansprüche, **dadurch gekennzeichnet, dass** der zweite Schalter (11, 20) ein statischer elektronischer Schalter ist.

8. Vorrichtung gemäß einem der vorherigen Ansprüche, **dadurch gekennzeichnet, dass** der Verzögerungsschaltkreis einen Gleichrichterschaltkreis (12) umfasst, um eine Aktivierungsschwellenwert-Spannung des zweiten Schalters und eine Ladespannung einer Kapazität (13) per Betätigung des ersten Schalters (6) zu liefern.

9. Vorrichtung gemäß einem der vorherigen Ansprüche, **dadurch gekennzeichnet, dass** die Kapazität des Verzögerungsschaltkreises derart bestimmt wird, dass per Entladung wenigstens eine Aktivierungsschwellenwert-Spannung (TS) des zweien Schalters während wenigstens einer Dauer (D) geliefert wird, die einer Funkfrequenzübertragung entspricht.

10. Vorrichtung gemäß einem der vorherigen Ansprüche, **dadurch gekennzeichnet, dass** der Verzögerungsschaltkreis (7) und der zweite elektronische Schalter (8) zusammen in einem zweien Modul oder elektronischen Bauteil (20, 51) angeordnet sind.

11. Vorrichtung gemäß einem der vorherigen Ansprüche, **dadurch gekennzeichnet, dass** das zweite Modul oder elektronische Bauteil (20) auf dem Antennenschaltkreis (3) angeordnet ist und an eine Spule (6) angeschlossen ist, die auf dem Träger angeordnet ist.

12. Vorrichtung gemäß Anspruch 6, **dadurch gekennzeichnet, dass** der erste Schalter (6) auf dem Spulenschaltkreis (9) angeordnet ist.

13. Chipkarte vom Typ ohne Kontakt mit der Vorrichtung gemäß einem der vorherigen Ansprüche.

14. Chipkarte gemäß Anspruch 13, **dadurch gekennzeichnet, dass** der Antennenhauptschaltkreis (3) in oder auf dem integrierten Schaltkreis oder auf einem Kartenkörper (2) oder auf einem Modul angeordnet ist, der ein den integrierten Schaltkreis tragendes Dielektrikum hat.

15. Integriertes Schaltkreismodul für eine elektronische Funkfrequenzübertragungsvorrichtung, wobei der genannte integrierte Schaltkreis dazu bestimmt ist, eine Übertragungssoftware-Anwendung im integrierten Schaltkreis zu enthalten, wobei das genannte Modul einen ersten Schalter und einen Verzögerungsschaltkreis (7, 8, 20) mit einem Aktivierungszustand umfasst, der dazu bestimmt ist, den integrierten Schaltkreis (4) mindestens nährend der Dauer der Übertragung versorgt zu halten, **dadurch gekennzeichnet, dass** der Aktivierungszustand per Anschluss des Verzögerungsschaltkreises an eine elektrische Energiequelle oder an ein Speichermittel (9) der elektrischen Energie und per Betätigung des ersten Schalters (6) erhalten wird.
